# EUROPÄISCHE PATENTSCHRIFT

(11) **EP 2 883 182 B1**
(45) Veröffentlichungstag und Bekanntmachung des Hinweises auf die Patenterteilung: **27.06.2018**
(21) Anmeldenummer: 13745860.0
(22) Anmeldetag: 08.08.2013
(51) Int. Cl.: G06F 21/83, G06F 21/84, G06F 21/34, G06F 21/36, G06F 21/77, G06F 3/0488, H04L 29/06, H04W 12/06

(54) **VORRICHTUNGSANORDNUNG ZUR DURCHFÜHRUNG ODER FREIGABE EINES ELEKTRONISCHEN DIENSTS UND VERFAHREN ZUM SICHEREN EINGEBEN VON AUTORISIERUNGSDATEN**
DEVICE ASSEMBLY FOR CARRYING OUT OR RELEASING AN ELECTRONIC SERVICE AND METHOD FOR SECURELY ENTERING AUTHORIZATION DATA
ENSEMBLE DISPOSITIF POUR EXÉCUTER OU LANCER UN SERVICE ÉLECTRONIQUE ET PROCÉDÉ POUR LA SAISIE SÉCURISÉE DE DONNÉES D'AUTORISATION

(30) Priorität: 10.08.2012 DE 102012015913
(43) Veröffentlichungstag der Anmeldung: 17.06.2015
(73) Patentinhaber: Rosch Holding & Consulting GmbH, 82054 Sauerlach (DE)
(72) Erfinder: SCHNEIDER, Robert, A-Salzburg 5020 (AT); CZOBEL, Istvan, CH-8280 Kreuzlingen (CH)
(74) Vertreter: Prinz & Partner mbB
(86) Internationale Anmeldenummer: PCT/EP2013/066636
(87) Internationale Veröffentlichungsnummer: WO 2014/023802

(56) Entgegenhaltungen:
- EP-A1- 2 192 520
- US-A1- 2010 242 104
- Technology Overview: "Intel IPT with PKI Technology Overview Intel Identity Protection Technology with PKI", , 22. Mai 2012 (2012-05-22), XP055084773, Gefunden im Internet: URL:http://download-software.intel.com/sit es/default/files/9e/9c/intelr-identity-pro tection-technology-with-pki-technology-ove rview-2012.pdf [gefunden am 2013-10-22]
- Ned Smith: "Identity Protection Technology", , 1. Oktober 2011 (2011-10-01), XP55084771, Gefunden im Internet: URL:http://www.kerberos.org/events/2011con f-interop/2011slides/2011kerberos_ned_smit h.pdf [gefunden am 2013-10-22]

## Beschreibung

Die Erfindung betrifft eine Vorrichtungsanordnung zur Durchführung oder Freigabe eines elektronischen Diensts. Die Erfindung betrifft außerdem ein Verfahren zum sicheren Eingeben von Autorisierungsdaten für die Durchführung oder Freigabe eines elektronischen Diensts.

Für die Durchführung oder Freigabe eines elektronischen Diensts, der personenbezogen ist und/oder bei dem sicherheitsrelevante oder vertrauliche Daten involviert sind, ist es üblich, dass der Benutzer eine persönliche Identifikationsnummer (PIN) oder dergleichen eingeben muss, um sich gegenüber dem System, das den elektronischen Dienst bereitstellt, zu authentifizieren. Ein Beispiel hierfür sind finanzielle Transaktionen, wie etwa das Bargeldabheben an einem Geldautomaten oder das Durchführen eines bargeldlosen Zahlvorgangs an einem POS-Terminal (Point-of-Sale-Terminal) mit einer EC-Karte.

Aus der EP 2 192 520 A1 ist eine Vorrichtungsanordnung mit den Merkmalen der Oberbegriffe der Ansprüche 1 und 2 bekannt. Nach dem Empfang einer PIN-Anfrage eines Smartcard-Lesers durch ein mobiles Kommunikationsgerät wird der Benutzer über eine Benutzerschnittstelle zur Eingabe eines PIN-Codes über die Tastatur des Mobilgeräts aufgefordert. Der eingegebene PIN-Code wird vom Mobilgerät an den Kartenleser und von diesem an die Smartcard weitergegeben, wo der PIN-Code geprüft wird.

Aufgabe der Erfindung ist es, die Durchführung oder Freigabe eines elektronischen Diensts der oben genannten Art flexibler und kostengünstiger zu gestalten, dabei aber dennoch die erforderliche Sicherheit für den Benutzer zu gewährleisten.

Gelöst wird diese Aufgabe durch eine Vorrichtungsanordnung mit den Merkmalen des Anspruchs 1 bzw. durch eine Vorrichtungsanordnung mit den Merkmalen des Anspruchs 2 sowie durch ein Verfahren mit den Merkmalen des Anspruchs 8. Vorteilhafte und zweckmäßige Ausgestaltungen der erfindungsgemäßen Vorrichtungsanordnungen und des erfindungsgemäßen Verfahrens sind in den zugehörigen Unteransprüchen angegeben.

Gemäß einem ersten Aspekt der Erfindung umfasst die erfindungsgemäße Vorrichtungsanordnung zur Durchführung oder Freigabe eines elektronischen Diensts ein Mobilgerät, insbesondere ein Smartphone, einen Personal Digital Assistant (PDA), ein (Sub-)Notebook, ein Netbook oder einen Tablet-Computer, auf dem ein Betriebssystem läuft und welches eine Netzschnittstelle für eine Netzanbindung aufweist. Die Vorrichtungsanordnung umfasst außerdem ein separates Elektronikmodul, welches über eine Schnittstelle mit dem Mobilgerät verbunden ist und einen Kartenleser für eine Chipkarte sowie eine Steuereinheit aufweist. Gemäß der Erfindung ist die Steuereinheit des Elektronikmoduls so eingerichtet, dass sie auf dem Mobilgerät unabhängig von dessen Betriebssystem ein Eingabefenster erzeugen kann, über das ein Benutzer Autorisierungsdaten für die Durchführung oder Freigabe des elektronischen Diensts eingeben kann.

Gemäß einem zweiten Aspekt der Erfindung umfasst die erfindungsgemäße Vorrichtungsanordnung zur Durchführung oder Freigabe eines elektronischen Diensts ein Mobilgerät, auf dem ein Betriebssystem läuft und welches eine Netzschnittstelle für eine Netzanbindung und ein Touchscreen-Display aufweist. Die Vorrichtungsanordnung umfasst außerdem ein separates Elektronikmodul, welches über eine Schnittstelle mit dem Mobilgerät verbunden ist und einen Kartenleser für eine Chipkarte sowie eine Steuereinheit aufweist. Gemäß der Erfindung ist auf dem Mobilgerät ein Anwendungsprogramm installiert, das so eingerichtet ist, dass es im Touchscreen-Display des Mobilgeräts ein Eingabefenster erzeugt, über das ein Benutzer Autorisierungsdaten für die Durchführung oder Freigabe des elektronischen Diensts eingeben kann, wobei das Eingabefenster eine Anordnung virtueller Tasten enthält. Außerdem ist die Steuereinheit des Elektronikmoduls so eingerichtet, dass sie wenigstens für einige der virtuellen Tasten individuelle Rastergrafiken zur Verfügung stellt, die vom Anwendungsprogramm an der Stelle der jeweiligen virtuellen Taste angezeigt werden.

Die Erfindung beruht auf der Erkenntnis, dass die Funktionalität, die für die Durchführung oder die Freigabe eines elektronischen Diensts erforderlich ist, nicht an bestimmte anwendungsspezifische Geräte, wie beispielsweise ein stationäres POS-Terminal, gebunden sein muss. Gemäß der Erfindung ermöglicht eine Erweiterung eines Mobilgeräts um ein spezielles Elektronikmodul mit einem Chipkartenleser genau diese Funktionalität, und zwar ohne prinzipielle Ortseinschränkung und ohne Einbußen hinsichtlich der Sicherheit bzw. des Datenschutzes. Hierzu sieht die Erfindung die Kombination der Eingabe persönlicher Autorisierungsdaten (PIN oder dergleichen) mit Prüfdaten vor, die auf einer Chipkarte des Benutzers hinterlegt sind, wobei die Eingabe der Autorisierungsdaten besonders sicher gestaltet ist. Die Chipkarte kann eine SmartCard, eine SIM-Karte oder eine ähnliche Karte mit einem integrierten Chip sein. Die Größe der Chipkarte (Formfaktor) ist jedenfalls nicht wesentlich für die Erfindung.

Gemäß dem ersten Aspekt der Erfindung ist dadurch, dass das Eingabefenster zur Eingabe der Autorisierungsdaten nicht vom Betriebssystem des Mobilgeräts, das grundsätzlich keine ausreichende Sicherheit bietet, und auch nicht von einem auf dem Mobilgerät installierten Programm, sondern von der Steuereinheit des Elektronikmoduls bereitgestellt wird, ist ein Ausspionieren der Eingabe erheblich erschwert.

Gemäß dem zweiten Aspekt der Erfindung, wonach auf dem Touchscreen-Display des Mobilgeräts virtuelle Tasten dargestellt werden, deren für das Mobilgerät ohnehin nicht erkennbare Belegung das Elektronikmodul bei jeder Eingabe neu bestimmen kann, ist ein Ausspionieren der Autorisierungsdaten-Eingabe auf Seiten des Mobilgeräts praktisch unmöglich.

Das Elektronikmodul der erfindungsgemäßen Vorrichtung ist kostengünstig herstellbar, da außer dem Kartenleser und der besonderen Steuerung die weiteren für die Durchführung oder Freigabe des elektronischen Diensts erforderlichen Hardware- und Softwarekomponenten vom Mobilgerät bereitgestellt werden. Mit anderen Worten kann praktisch jedes ohnehin vorhandene Mobilgerät mit Netzanbindung durch ein erfindungsgemäßes Elektronikmodul (temporär) zu einem POS etc. aufgerüstet werden.

Um die Gefahr des Ausspionierens kritischer Daten möglichst effektiv auszuschalten, ist vorgesehen, dass die Steuereinheit des Elektronikmoduls über eine Verschlüsselungstechnik verfügt und so eingerichtet ist, dass von der Chipkarte ausgelesene Daten sofort verschlüsselt und sicherheitsrelevante oder vertrauliche Daten vom Elektronikmodul nur verschlüsselt übermittelt werden. Auf diese Weise wird ein sicherer Kanal zwischen dem Kartenleser und der Außenwelt, insbesondere dem Mobilgerät, hergestellt, sodass sichergestellt ist, dass die kritischen Daten weder im Mobilgerät noch bei der Übermittlung vom Mobilgerät zu einem Server manipuliert werden können.

Die Eingabe der Autorisierungsdaten durch den Benutzer kann noch sicherer gestaltet werden, indem die Steuereinheit bzw. das Anwendungsprogramm so eingerichtet ist, dass bei der Erzeugung des Eingabefensters ein Ziffern- oder Buchstabenblock mit benutzerwählbaren virtuellen Tasten (Ziffern-, Buchstaben- und/oder Symbolfeldern) angezeigt wird, die randomisiert angeordnet sind. Es ist nämlich nicht auszuschließen, dass normale Tastatureingaben am Mobilgerät durch spezielle Schadprogramme überwacht werden. Da die Eingabe der Autorisierungsdaten dank des Eingabefensters aber auf besondere Weise durch Anwählen der angezeigten virtuellen Tasten erfolgt, deren randomisierter Ausgangszustand darüber hinaus nicht vorhersehbar ist, ist es praktisch unmöglich, eine solche Eingabe auszuspionieren.

Die Eingabe der Autorisierungsdaten über einen Touchscreen ist insbesondere in Kombination mit der randomisierten Anordnung der benutzerwählbaren virtuellen Tasten des Eingabefensters vorteilhaft, da das Anwählen der virtuellen Tasten mit den Fingern oder einem Stift sehr komfortabel ist und nicht zurückverfolgt werden kann wie bei einer echten Tastatur mit fest vorgegebener Tastenanordnung.

Eine vorteilhafte physikalische Verbindung und eine Datenverbindung zwischen dem Elektronikmodul und dem Mobilgerät werden am komfortabelsten dadurch erreicht, dass das Mobilgerät und das Elektronikmodul über einen Anschluss und einen Steckverbinder miteinander verbunden sind.

Gemäß einer anderen bevorzugten Ausführungsform der Erfindung sind das Mobilgerät und das Elektronikmodul drahtlos miteinander verbunden, d. h. per Funk. Die Funkverbindung kann beispielsweise nach dem Bluetooth-Standard oder einer vergleichbaren Technologie hergestellt werden. Die Funkverbindung hat den Vorteil, dass keine physikalische Verbindung zwischen dem Mobilgerät und dem Elektronikmodul erforderlich ist. Die Trennung von Mobilgerät und Elektronikmodul nicht nur bei der Aufbewahrung, sondern auch beim Betrieb des Elektronikmoduls sorgt für eine noch höhere Sicherheit, weil die dedizierte Funkverbindung das Elektronikmodul weniger angreifbar macht, sodass dieses nicht so leicht ausspioniert werden kann.

Vorzugsweise verfügt das Elektronikmodul über eine eigene, vom Mobilgerät unabhängige Firmware (Intelligenz), die nicht manipulierbar ist.

Das erfindungsgemäße Verfahren zum sicheren Eingeben von Autorisierungsdaten für die Durchführung oder Freigabe eines elektronischen Diensts umfasst folgende Schritte:
- Bereitstellen einer erfindungsgemäßen Vorrichtungsanordnung;
- Verbinden des Elektronikmoduls mit dem Mobilgerät (z. B. per Funk, durch eine Steckverbindung oder per Kabel);
- Einführen einer Chipkarte in den Kartenleser;
- Erzeugen eines Eingabefensters mit einer eine Anordnung virtueller Tasten auf dem Touchscreen-Display des Mobilgeräts durch ein auf dem Mobilgerät installiertes Anwendungsprogramm;
- Anzeigen von Rastergrafiken an den Stellen der virtuellen Tasten, wobei die Rastergrafiken von der Steuereinheit des Elektronikmoduls bereitgestellt werden;
- Eingeben von Autorisierungsdaten über das Eingabefenster durch einen Benutzer durch Antippen der virtuellen Tasten;
- Decodieren der eingegebenen Autorisierungsdaten in der Steuereinheit; und
- Eingeben von Autorisierungsdaten über das Eingabefenster durch einen Benutzer.

Bezüglich der Vorteile des Verfahrens wird auf die obigen Ausführungen zur Vorrichtungsanordnung gemäß dem zweiten Aspekt der Erfindung verwiesen.

Gemäß einem bevorzugten Ablauf des erfindungsgemäßen Verfahrens stellt die Steuereinheit auf Anfrage des Anwendungsprogramms für jede virtuelle Taste eine individuelle Rastergrafik bereit und überträgt diese verschlüsselt an das Mobilgerät. Das Anwendungsprogramm stellt dann gemäß einer von der Steuereinheit vorgegebenen Zuordnung jede Taste mit der dafür bestimmten Rastergrafik dar.

Damit die Zuordnung der Rastergrafiken zu den virtuellen Tasten nicht zurückverfolgt bzw. reproduziert werden kann, erfolgt die Zuordnung sicherheitshalber mithilfe eines Zufallsgenerators, insbesondere eines hardwarebasierten Zufallsgenerators.

Dadurch, dass das Anwendungsprogramm nur die Positionsreihenfolge der angetippten virtuellen Tasten als Code speichert und diesen Code zur Decodierung an die Steuereinheit sendet, ist selbst ein Abfangen der eingegebenen Daten unschädlich, da die Positionsreihenfolge alleine keine Zuordnung zu den eingegebenen Ziffern, Buchstaben oder Symbolen erlaubt. Die Positionsreihenfolge kann nur vom Elektronikmodul decodiert werden, d. h. die tatsächlichen Autorisierungsdaten werden erst im geschützten Elektronikmodul aufgedeckt.

Um die Eingabe des Benutzers zu prüfen, verifiziert die Steuereinheit nach einer Decodierung der Positionsreihenfolge die so ermittelten Autorisierungsdaten mithilfe der Chipkarte.

Eine Weiterbildung der Erfindung sieht vor, dass die Netzschnittstelle des Mobilgeräts für eine Anbindung des Elektronikmoduls an einen entfernten Server genutzt wird. Dadurch können die Funktionalitäten des Elektronikmoduls unterstützt, verbessert oder ganz übernommen werden.

Gemäß einem alternativen Aspekt der Erfindung ist zur Lösung der Aufgabe eine Vorrichtungsanordnung zur Durchführung oder Freigabe eines elektronischen Diensts vorgesehen, mit einem Mobilgerät, auf dem ein Betriebssystem läuft und welches eine Netzschnittstelle für eine Netzanbindung und ein Display aufweist, und einem separaten Elektronikmodul, welches über eine Schnittstelle mit dem Mobilgerät verbunden ist und einen Kartenleser für eine Chipkarte sowie eine Steuereinheit aufweist. Auf dem Mobilgerät ist ein Anwendungsprogramm installiert, das so eingerichtet ist, dass es im Display des Mobilgeräts ein Eingabefenster erzeugt, über das ein Benutzer Autorisierungsdaten für die Durchführung oder Freigabe des elektronischen Diensts eingeben kann. Das Elektronikmodul weist eine eigene Tastatur auf, wobei die Steuereinheit des Elektronikmoduls so eingerichtet ist, dass die Autorisierungsdaten über die Tastatur des Elektronikmoduls eingegeben werden können.

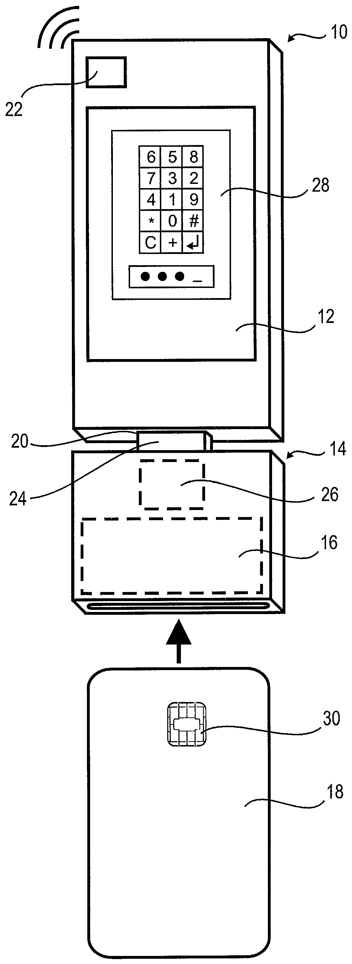

Weitere Merkmale und Vorteile der Erfindung ergeben sich aus der nachfolgenden Beschreibung und aus der beigefügten Zeichnung, auf die Bezug genommen wird. In der Zeichnung zeigt die einzige Figur eine erfindungsgemäße Vorrichtungsanordnung mit einer Chipkarte.

In der Figur ist eine Vorrichtungsanordnung zur Durchführung oder Freigabe eines elektronischen Diensts dargestellt. Die Vorrichtungsanordnung besteht im Wesentlichen aus einem Mobilgerät 10 mit einem Display 12, vorzugsweise ein Touchscreen, und einem manipulationsgeschützten Elektronikmodul 14 mit einem Kartenleser 16 für eine Chipkarte 18. Der Kartenleser 16 kann ein kontaktgebundener oder kontaktloser Leser sein, z. B. geeignet für Chipkarten nach dem Standard ISO 7816 oder nach dem Standard ISO/IEC 14443.

Auf dem Mobilgerät 10, das ein Smartphone, Personal Digital Assistant (PDA), (Sub-)Notebook, Netbook, Tablet-Computer oder dergleichen sein kann, läuft ein Betriebssystem, das in bekannter Weise die Benutzung des Mobilgeräts 10 ermöglicht. Des Weiteren ist auf dem Mobilgerät 10 ein spezielles Anwendungsprogramm (App) zur Durchführung eines oder mehrerer elektronischer Dienste installiert, auf die später eingegangen wird.

Das Mobilgerät 10 weist wenigstens einen Anschluss 20 zum Einstecken eines Anschlusskabels oder eines Peripheriegeräts auf (z. B. einen USB-Anschluss oder einen Dock-Anschluss). Außerdem verfügt das Mobilgerät 10 über eine Netzschnittstelle 22 für eine Anbindung des Mobilgeräts 10 an das digitale Telefonnetz oder ein anderes Netzwerk, insbesondere ein lokales Netzwerk und/oder das Internet.

Das Elektronikmodul 14 weist neben dem Kartenleser 16 einen zum Anschluss 20 des Mobilgeräts 10 passenden Steckverbinder 24 auf, der eine physikalische Verbindung und eine Datenübertragung zwischen dem Elektronikmodul 14 und dem Mobilgerät 10 ermöglicht. Außerdem kann die Stromversorgung des Elektronikmoduls 14 durch das Mobilgerät 10 über diese Schnittstelle erfolgen.

Die Verbindung zwischen dem Mobilgerät 10 und dem Elektronikmodul 14 kann aber auch drahtlos sein. Hierzu kann eine Funkverbindung nach dem Bluetooth-Standard oder einer ähnlichen Technologie vorgesehen sein. In diesem Fall kann das Elektronikmodul 14 nicht nur physikalisch getrennt vom Mobilgerät 10 aufbewahrt, sondern auch genutzt werden.

Die Funktionalität des Elektronikmoduls 14, einschließlich dessen Kartenlesers 16, wird durch eine Steuereinheit 26 in Form einer oder mehrerer integrierter Schaltungen (ASIC, Mikroprozessor oder -controller) zur Verfügung gestellt. Die Steuereinheit 26 verfügt insbesondere über eine leistungsstarke Verschlüsselungstechnik. Im Chip 30 einer Chipkarte 18 gespeicherte Daten werden bereits beim Auslesen verschlüsselt. Ebenso werden sicherheitsrelevante oder vertrauliche Daten vom Elektronikmodul 14 nur in verschlüsselter Form gesendet, sodass eine Manipulation dieser Daten im Mobilgerät 10 oder außerhalb ausgeschlossen ist.

Die Steuereinheit 26 des Elektronikmoduls 14 ist somit in der Lage, einen verschlüsselten Kanal zur sicheren Datenübertragung zwischen dem Elektronikmodul 14 und dem Mobilgerät 10 über den Steckverbinder 24 und den Anschluss 20 aufzubauen. Mithilfe dieses sicheren Kanals kann die Steuereinheit 26 auf dem Display 12 des Mobilgeräts 10 - unabhängig von dessen Betriebssystem - ein Eingabefenster 28 erzeugen. Das Eingabefenster 28 ist nur für den Benutzer des Mobilgeräts 10 erkennbar, nicht jedoch für das Betriebssystem des Mobilgeräts 10. Die grundlegende Technik, wie auf dem Mobilgerät 10 unabhängig von dessen Betriebssystem ein Eingabefenster 28 erzeugt werden kann, ist beispielsweise dem Dokument "Intel® Identity Protection Technology with PKI" (im Internet abgerufen unter: http://ipt.intel.com/Libraries/Documents/Technology_Overview_-_Intel%C2%AE_I dentity_Protection_Technology_with_PKI.pdf) entnehmbar.

Nachfolgend wird beispielhaft die Funktionsweise der Vorrichtungsanordnung für einen Fall beschrieben, bei dem die Vorrichtungsanordnung ein herkömmliches kabelgebundenes und damit stationäres POS-Terminal ersetzt.

Für eine bargeldlose Zahlung wird das Elektronikmodul 14 mit dem Mobilgerät 10 verbunden, und das Anwendungsprogramm wird gestartet. Der gewünschte Zahlbetrag wird über ein Eingabefenster, das vom Anwendungsprogramm bereitgestellt wird, in das Mobilgerät 10 eingegeben. Nun wird die Chipkarte 18 des Kunden (Benutzers) verlangt und in den Kartenleser 16 eingeführt. Diese Schritte werden üblicherweise, aber nicht notwendigerweise vom Zahlungsempfänger durchgeführt.

Über die Onlineverbindung des Mobilgeräts 10, die durch dessen Netzschnittstelle 22 hergestellt wurde, werden Plausibilität und Gültigkeit der Chipkarte 18 überprüft, insbesondere ob diese zugelassen und noch nicht abgelaufen ist. Nach erfolgreicher Prüfung erzeugt die Steuereinheit 26 des Elektronikmoduls 14 das Eingabefenster 28 auf dem Display 12 des Mobilgeräts 10 und fordert den Kunden zur Eingabe seiner in Verbindung mit der Chipkarte 18 gültigen PIN auf.

Der Kunde gibt daraufhin über das Touchscreen-Display 12 am Mobilgerät 10 die PIN ein. Weder das Eingabefenster 28 noch die Eingabe der PIN sind für das Betriebssystem des Mobilgeräts 10 erkennbar. Die PIN wird sofort über den sicheren Kanal an den Chip 30 der Chipkarte 18 weitergegeben. Die Korrektheit der PIN wird im Chip 30 überprüft; eine Prüfung oder Verarbeitung der PIN im Mobilgerät 10 findet nicht statt. Bei positivem Ergebnis wird der bargeldlose Zahlungsvorgang in bekannter Weise per Onlineverbindung mit der Bank des Kunden durchgeführt, wobei die relevanten Daten in verschlüsselter Form übertragen werden.

Zur Steigerung der Sicherheit wird bei der Erzeugung des Eingabefensters 28 ein Ziffern- oder Buchstabenblock mit benutzerwählbaren Ziffern-, Buchstaben- und/oder Symbolfeldern im Display 12 des Mobilgeräts 10 angezeigt, wobei die Reihenfolge dieser nachfolgend als virtuelle Tasten bezeichneten Felder, d. h. deren Anordnung relativ zueinander, randomisiert ist. Somit ist die Anordnung der virtuellen Tasten im Eingabefenster 28 bei jeder Eingabe zufällig, was das Ausspionieren der PIN-Eingabe deutlich erschwert. Die Randomisierung des Eingabefensters 28 wird alleine durch die Steuereinheit 26 des Elektronikmoduls 14 gesteuert, gegebenenfalls in Kombination mit dem Chip 30 der Chipkarte 18 bzw. von darin gespeicherten Daten.

Nachfolgend wird eine andere bevorzugte Variante des Verfahrens zum sicheren Eingeben von Autorisierungsdaten für die Durchführung oder Freigabe eines elektronischen Diensts beschrieben. Das Verfahren basiert wiederum auf der zuvor beschriebenen Vorrichtungsanordnung mit dem Mobilgerät 10, das ein Touchscreen-Display 12 aufweist, und dem separaten, manipulationsgeschützten Elektronikmodul 14, das einen kontaktgebundenen oder kontaktlosen Kartenleser 16 für eine Chipkarte 18 aufweist. Das an das Mobilgerät 10 anschließbare Elektronikmodul 14 verfügt über eine eigene, vom Mobilgerät 10 unabhängige Firmware.

Die hier beschriebene Variante unterscheidet sich in der Eingabe der PIN, die für das jeweilige Betriebssystem des Mobilgeräts 10 unsichtbar bleiben soll. Das spezielle auf dem Mobilgerät 10 installierte Anwendungsprogramm (App) für die Durchführung oder Freigabe des elektronischen Diensts erzeugt im Display 12 des Mobilgeräts 10 ein Eingabefenster 28 mit einem zunächst "leeren" Ziffern- oder Buchstabenblock. Die Steuereinheit 26, genauer gesagt die Firmware des Elektronikmoduls 14, erzeugt auf Anfrage des Anwendungsprogramms für jede virtuelle Taste des Ziffern- oder Buchstabenblocks eine individuelle Rastergrafik (Bitmap) und überträgt diese verschlüsselt an das Mobilgerät 10. Das Anwendungsprogramm stellt gemäß einer von der Steuereinheit 26 vorgegebenen Zuordnung jede Taste mit der dafür bestimmten Rastergrafik dar. Die Rastergrafiken selbst repräsentieren Ziffern, Buchstaben oder Symbole, die nur für das menschliche Auge erkennbar sind, z. B. auf Basis einer Siebensegmentanzeige. Das bedeutet, dass weder das Betriebssystem des Mobilgeräts 10 noch das Anwendungsprogramm noch irgendwelche Spähprogramme (Spyware) oder dergleichen einer solchen Rastergrafik das damit dargestellte Zeichen zuordnen können.

Die Anordnung der Rastergrafiken im Eingabefenster 28 ist zufällig. Jedes Mal, wenn das Programm eine PIN-Eingabe initiiert, wird von der Steuereinheit 26 im Elektronikmodul 14 ein Zufallsgenerator aktiviert, der vorzugsweise hardwarebasiert ist. Das Ergebnis des Zufallsgenerators bestimmt die Anordnung der Rastergrafiken und damit die Anordnung der durch Rastergrafiken dargestellten Ziffern, Buchstaben oder Symbole, die zur Eingabe zur Auswahl stehen.

Der Kunde (Benutzer) gibt seine PIN durch Antippen der entsprechenden virtuellen Tasten im Eingabefenster 28 ein. Dabei speichert das Anwendungsprogramm nur die Sequenz der Positionen der angetippten virtuellen Tasten (Positionsreihenfolge) und sendet diese Information als Code an die Steuereinheit 26 des Elektronikmoduls 14.

Die Steuereinheit 26 kann der Positionsreihenfolge die Ziffern, Buchstaben oder Symbole, die der Benutzer beim Antippen gesehen hat, zuordnen und so die gewollte PIN-Eingabe des Benutzers ermitteln. Die auf diese Weise decodierte PIN wird mithilfe des Chips 30 der Chipkarte 18 verifiziert, indem von der Steuereinheit 26 z. B. ein an sich bekannter PIN-Vergleichs-Befehl abgesetzt wird.

In einer Weiterbildung der beschriebenen Eingabevarianten wird die Netzschnittstelle 22 des Mobilgeräts 10 für eine Anbindung des Elektronikmoduls 14 an einen entfernten Server genutzt. Diese Anbindung ermöglicht es, dass (wahlweise) wesentliche Funktionalitäten der Steuereinheit 26 des Elektronikmoduls 14 und/oder zusätzliche Funktionalitäten auf den Server ausgelagert werden. Dadurch können leistungsstärkere Verschlüsselungs- und Randomisierungstechniken etc. zur Verfügung gestellt werden.

Die zur Durchführung oder Freigabe des elektronischen Diensts vorgesehene Vorrichtungsanordnung ist im Gegensatz zu einem herkömmlichen POS-Terminal nicht ortsgebunden, sondern kann überall eingesetzt werden, wo das Mobilgerät 10 eine Netzverbindung herstellen kann.

Das oben beschriebene Anwendungsbeispiel einer finanziellen Transaktion ist keinesfalls einschränkend zu verstehen. Insbesondere die Eingabe von Autorisierungsdaten (PIN oder dergleichen) mit dem randomisierten Eingabefenster 28 kann bei vielen Anwendungen Verwendung finden, bei denen die Sicherheit bzw. Vertraulichkeit von Daten eine Rolle spielt, wie etwa bei der Verifizierung von Personen, z. B. im Zusammenhang mit dem elektronischen Personalausweis oder mit der elektronischen Gesundheitskarte.

Eine Abwandlung der oben beschriebenen Vorrichtungsanordnung zur Durchführung oder Freigabe eines elektronischen Diensts sieht ein separates Elektronikmodul 14 vor, das über eine eigene Tastatur, im Gegensatz zu einem gewöhnlichen POS-Terminal aber nicht über ein eigenes Display verfügt. Die Tastatur kann in technischer Hinsicht beliebig ausgebildet sein. Die Anzahl der Tasten kann auf diejenigen beschränkt sein, die zur Eingabe der Autorisierungsdaten benötigt werden. Ansonsten ist der Aufbau der Vorrichtungsanordnung nicht wesentlich verändert.

Für die Eingabe der Autorisierungsdaten (PIN oder dergleichen) erzeugt wiederum das spezielle auf dem Mobilgerät 10 installierte Anwendungsprogramm im Display 12 des Mobilgeräts 10 ein Eingabefenster 28 mit einem Eingabefeld. Der Benutzer gibt die Autorisierungsdaten aber nicht über das Mobilgerät 10, sondern über die Tastatur des Elektronikmoduls 14 ein. Die Steuereinheit 26 des Elektronikmoduls 14 ist entsprechend eingerichtet, sodass die Autorisierungsdaten vom Elektronikmodul 14 an das Mobilgerät 10 (verschlüsselt) übermittelt werden. Im Eingabefeld auf dem Display 12 des Mobilgeräts 10 erscheint nach jedem Tastendruck nur ein Platzhalter ("*", "●" oder dergleichen.

Damit ist es noch schwieriger, die Eingabe des Benutzers auszuspähen, weil nicht die Tastatur bzw. das Touch-Display 12 des Mobilgeräts 10, sondern die separate, vom Mobilgerät 10 getrennte Tastatur benutzt wird. Die Verbindung zwischen dem Mobilgerät 10 und dem Elektronikmodul 14 ist vorzugsweise eine (nicht dauerhafte) Funkverbindung, wobei grundsätzlich auch die anderen, oben erwähnten Verbindungsarten verwendet werden können.

Eine weitere Anwendungsmöglichkeit, bei der jede der oben beschriebenen Varianten der Vorrichtungsanordnung zur Durchführung oder Freigabe eines elektronischen Diensts eingesetzt werden kann, wird im Folgenden beschrieben.

Zur Verknüpfung eines Benutzers mit einem Benutzerkonto eines netzwerkbasierten Dienstes (Cloud-Service) muss sich üblicherweise der Benutzer zu Beginn einer Sitzung anmelden, indem er einen Benutzernamen und ein Passwort oder ähnliche Zugangsdaten (login credentials) eingibt. Diese Daten ermöglichen seitens des Dienstes eine Authentifizierung des Benutzers. Um diese umständliche Prozedur zu vereinfachen, wird die Eingabe der Zugangsdaten durch die Eingabe einer PIN oder dergleichen mithilfe des Elektronikmoduls 14 ersetzt. Dabei kann jede der oben beschriebenen Methoden der PIN-Eingabe zum Einsatz kommen.

Das veränderte Einloggen, bei dem sich der Benutzer nur seine persönliche PIN, nicht aber einen Benutzernamen und ein (kompliziertes, sicheres) Passwort gemerkt haben muss, erfordert seitens des Mobilgeräts 10 ein entsprechend abgewandeltes Anwendungsprogramm (App) zum Aufruf des Dienstes, sodass anstelle der Abfrage der üblichen Zugangsdaten die sichere PIN-Eingabe initiiert wird. Außerdem sind das Anwendungsprogramm und der Dienst so aufeinander abzustimmen, dass durch die PIN-Übermittlung eine Authentifizierung in Verbindung mit einem Austausch von Schlüsseln zwischen dem Dienst und der Anwendung durchgeführt wird. Unter Verwendung dieser Schlüssel ist dann eine sichere Kommunikation zwischen dem Mobilgerät 10 und dem Dienst möglich.

Durch das veränderte Einloggen mit der sicheren PIN-Eingabe ist es erheblich schwieriger, ein Benutzerkonto zu "knacken".

Obwohl die Hauptanwendungen der Erfindung auf einer Kombination des Elektronikmoduls 14 mit einem Mobilgerät 10 basieren, ist es selbstverständlich auch möglich, das Elektronikmodul 14 mit einem stationären Gerät, insbesondere einem Desktop-PC (mit Touchscreen) zu kombinieren.

### Bezugszeichenliste

- 10: Mobilgerät
- 12: Display
- 14: Elektronikmodul
- 16: Kartenleser
- 18: Chipkarte
- 20: Anschluss
- 22: Netzschnittstelle
- 24: Steckverbinder
- 26: Steuereinheit
- 28: Eingabefenster
- 30: Chip

## Patentansprüche

1. Vorrichtungsanordnung zur Durchführung oder Freigabe eines elektronischen Diensts, mit
einem Mobilgerät (10), auf dem ein Betriebssystem läuft und welches eine Netzschnittstelle (22) für eine Netzanbindung aufweist, und
einem separaten Elektronikmodul (14), welches über eine Schnittstelle (20, 24) mit dem Mobilgerät (10) verbunden ist und einen Kartenleser (16) für eine Chipkarte (18) sowie eine Steuereinheit (26) aufweist,
wobei auf dem Mobilgerät (10) ein Eingabefenster (28) erzeugt werden kann, über das ein Benutzer Autorisierungsdaten für die Durchführung oder Freigabe des elektronischen Diensts eingeben kann,
**dadurch gekennzeichnet, dass** die Steuereinheit (26) des Elektronikmoduls (14) so eingerichtet ist, dass sie das Eingabefenster (28) auf dem Mobilgerät (10) unabhängig von dessen Betriebssystem erzeugen kann.

2. Vorrichtungsanordnung zur Durchführung oder Freigabe eines elektronischen Diensts, mit
einem Mobilgerät (10), auf dem ein Betriebssystem läuft und welches eine Netzschnittstelle (22) für eine Netzanbindung und ein Touchscreen-Display (12) aufweist, und
einem separaten Elektronikmodul (14), welches über eine Schnittstelle (20, 24) mit dem Mobilgerät (10) verbunden ist und einen Kartenleser (16) für eine Chipkarte (18) sowie eine Steuereinheit (26) aufweist,
**dadurch gekennzeichnet,**
**dass** auf dem Mobilgerät (10) ein Anwendungsprogramm installiert ist, das so eingerichtet ist, dass es im Touchscreen-Display (12) des Mobilgeräts (10) ein Eingabefenster (28) erzeugt, über das ein Benutzer Autorisierungsdaten für die Durchführung oder Freigabe des elektronischen Diensts eingeben kann, wobei das Eingabefenster (28) eine Anordnung virtueller Tasten enthält, und
**dass** die Steuereinheit (26) des Elektronikmoduls (14) so eingerichtet ist, dass sie wenigstens für einige der virtuellen Tasten individuelle Rastergrafiken zur Verfügung stellt, die vom Anwendungsprogramm an der Stelle der jeweiligen virtuellen Taste angezeigt werden.

3. Vorrichtungsanordnung nach Anspruch 1 oder 2, **dadurch gekennzeichnet, dass** die Steuereinheit (26) über eine Verschlüsselungstechnik verfügt und so eingerichtet ist, dass von der Chipkarte (18) ausgelesene Daten sofort verschlüsselt und sicherheitsrelevante oder vertrauliche Daten vom Elektronikmodul (14) nur verschlüsselt übermittelt werden.

4. Vorrichtungsanordnung nach einem der vorhergehenden Ansprüche, **dadurch gekennzeichnet, dass** die Steuereinheit (26) bzw. das Anwendungsprogramm so eingerichtet ist, dass bei der Erzeugung des Eingabefensters (28) ein Ziffern- oder Buchstabenblock mit benutzerwählbaren virtuellen Tasten angezeigt wird, die randomisiert angeordnet sind.

5. Vorrichtungsanordnung nach einem der vorhergehenden Ansprüche, **dadurch gekennzeichnet, dass** das Mobilgerät (10) und das Elektronikmodul (14) über einen Anschluss (20) und einen Steckverbinder (24) miteinander verbunden sind.

6. Vorrichtungsanordnung nach einem der vorhergehenden Ansprüche, **dadurch gekennzeichnet, dass** das Mobilgerät (10) und das Elektronikmodul (14) drahtlos miteinander verbunden sind.

7. Vorrichtungsanordnung nach einem der vorhergehenden Ansprüche, **dadurch gekennzeichnet, dass** das Elektronikmodul (14) über eine eigene, vom Mobilgerät (10) unabhängige Firmware verfügt.

8. Verfahren zum sicheren Eingeben von Autorisierungsdaten für die Durchführung oder Freigabe eines elektronischen Diensts, mit folgenden Schritten:
- Bereitstellen einer Vorrichtungsanordnung nach einem der Ansprüche 2 bis 6;
- Verbinden des Elektronikmoduls (14) mit dem Mobilgerät (10);
- Einführen einer Chipkarte (18) in den Kartenleser (16);
- Erzeugen eines Eingabefensters (28) mit einer eine Anordnung virtueller Tasten auf dem Touchscreen-Display (12) des Mobilgeräts (10) durch ein auf dem Mobilgerät (10) installiertes Anwendungsprogramm;
- Anzeigen von Rastergrafiken an den Stellen wenigstens einiger der virtuellen Tasten, wobei die Rastergrafiken von der Steuereinheit (26) des Elektronikmoduls (14) bereitgestellt werden;
- Eingeben von Autorisierungsdaten über das Eingabefenster (28) durch einen Benutzer durch Antippen der virtuellen Tasten;
- Decodieren der eingegebenen Autorisierungsdaten in der Steuereinheit (26); und
- Verifizieren der decodierten Autorisierungsdaten mithilfe der Chipkarte (18).

9. Verfahren nach Anspruch 8, **dadurch gekennzeichnet, dass** die Steuereinheit (26) auf Anfrage des Anwendungsprogramms für jede virtuelle Taste eine individuelle Rastergrafik bereitstellt und verschlüsselt an das Mobilgerät (10) überträgt, und dass das Anwendungsprogramm gemäß einer von der Steuereinheit (26) vorgegebenen Zuordnung jede Taste mit der dafür bestimmten Rastergrafik darstellt.

10. Verfahren nach Anspruch 9, **dadurch gekennzeichnet, dass** die Zuordnung der Rastergrafiken zu den virtuellen Tasten mithilfe eines Zufallsgenerators erfolgt.

11. Verfahren nach einem der Ansprüche 8 bis 10, **dadurch gekennzeichnet, dass** das Anwendungsprogramm die Positionsreihenfolge der angetippten virtuellen Tasten als Code speichert und diesen Code zur Decodierung an die Steuereinheit (26) sendet.

12. Verfahren nach Anspruch 11, **dadurch gekennzeichnet, dass** die Steuereinheit (26) nach einer Decodierung der Positionsreihenfolge die so ermittelten Autorisierungsdaten mithilfe der Chipkarte (18) verifiziert.

13. Verfahren nach einem der Ansprüche 8 bis 12, **dadurch gekennzeichnet, dass** die Netzschnittstelle (22) des Mobilgeräts (10) für eine Anbindung des Elektronikmoduls (14) an einen entfernten Server genutzt wird.

14. Vorrichtungsanordnung zur Durchführung oder Freigabe eines elektronischen Diensts, mit
einem Mobilgerät (10), auf dem ein Betriebssystem läuft und welches eine Netzschnittstelle (22) für eine Netzanbindung und ein Display (12) aufweist, und
einem separaten Elektronikmodul (14), welches über eine Schnittstelle (20, 24) mit dem Mobilgerät (10) verbunden ist und einen Kartenleser (16) für eine Chipkarte (18) sowie eine Steuereinheit (26) aufweist,
**dadurch gekennzeichnet,**
**dass** auf dem Mobilgerät (10) ein Anwendungsprogramm installiert ist, das so eingerichtet ist, dass es im Touchscreen-Display (12) des Mobilgeräts (10) ein Eingabefenster (28) erzeugt, über das ein Benutzer Autorisierungsdaten für die Durchführung oder Freigabe des elektronischen Diensts eingeben kann, und
**dass** das Elektronikmodul (14) eine eigene Tastatur ohne Display aufweist, wobei die Steuereinheit (26) des Elektronikmoduls (14) so eingerichtet ist, dass die Autorisierungsdaten über die Tastatur des Elektronikmoduls (14) eingegeben werden können.

## Claims

1. A device assembly for carrying out or enabling an electronic service, comprising
a mobile device (10) on which an operating system runs and which includes a network interface (22) for connection to a network, and
a separate electronic module (14) that is connected to the mobile device (10) via an interface (20, 24) and includes a card reader (16) for a chip card (18) as well as a control unit (26),
wherein an input window (28) can be generated on the mobile device (10), via which input window (28) a user can input authorization data for carrying out or enabling the electronic service,
**characterized in that** the control unit (26) of the electronic module (14) is configured such that it can generate the input window (28) on the mobile device (10) independently of the operating system thereof.

2. A device assembly for carrying out or enabling an electronic service, comprising,
a mobile device (10) on which an operating system runs and which includes a network interface (22) for connection to a network, and a touch-screen display (12), and
a separate electronic module (14) that is connected to the mobile device (10) via an interface (20, 24) and includes a card reader (16) for a chip card (18) as well as a control unit (26),
**characterized in that**
installed on the mobile device (10) is an application program which is configured to generate an input window (28) on the touch-screen display (12) of the mobile device (10), via which input window (28) a user can input authorization data for carrying out or enabling the electronic service, wherein the input window (28) includes an arrangement of virtual keys, and
**in that** the control unit (26) of the electronic module (14) is configured to provide individual raster graphics for at least some of the virtual keys, which raster graphics are displayed by the application program in the position of the respective virtual key.

3. The device assembly according to claim 1 or 2, **characterized in that** the control unit (26) uses an encryption technology and is configured to immediately encrypt data read from the chip card (18) and to transmit security-relevant or confidential data from the electronic module (14) only in an encrypted form.

4. The device assembly according to any one of the preceding claims, **characterized in that** the control unit (26) or the application program is configured such that a block of numbers or letters with user-selectable virtual keys is displayed upon generation of the input window (28), which virtual keys are laid out in a randomized way.

5. The device assembly according to any one of the preceding claims, **characterized in that** the mobile device (10) and the electronic module (14) are connected to each other via a port (20) and a plug-in connector (24).

6. The device assembly according to any one of the preceding claims, **characterized in that** the mobile device (10) and the electronic module (14) are connected to each other in a wireless manner.

7. The device assembly according to any one of the preceding claims, **characterized in that** the electronic module (14) has its own firmware that is independent of the mobile device (10).

8. A method for securely inputting authorization data for carrying out or enabling an electronic service, comprising the following steps:
- providing a device assembly according to any one of claims 2 to 6;
- connecting the electronic module (14) to the mobile device (10);
- inserting a chip card (18) into the card reader (16);
- generating an input window (28) with a layout of virtual keys on the touch-screen display (12) of the mobile device (10) by using an application program installed on the mobile device (10);
- displaying raster graphics in the positions of at least some of the virtual keys, which raster graphics are provided by the control unit (26) of the electronic module (14);
- inputting authorization data via the input window (28) by a user touching the virtual keys;
- decoding the input authorization data in the control unit (26); and
- verifying the decoded authorization data by using the chip card (18).

9. The method according to claim 8, **characterized in that** the control unit (26) provides, upon request of the application program, an individual raster graphic for each virtual key and transmits it to the mobile device (10) in an encrypted form, and **in that** the application program displays each key with the raster graphic designated for it according to an association specified by the control unit (26).

10. The method according to claim 9, **characterized in that** the association of the raster graphics with the virtual keys is carried out by a random generator.

11. The method according to any one of claims 8 to 10, **characterized in that** the application program stores the order of positions of the touched virtual keys as a code and sends this code to the control unit (26) for decoding.

12. The method according to claim 11, **characterized in that** the control unit (26) verifies, after decoding the order of positions, the authorization data determined in this way by using the chip card (18).

13. The method according to any one of claims 8 to 12, **characterized in that** the network interface (22) of the mobile device (10) is used for connecting the electronic module (14) to a remote server.

14. A device assembly for carrying out or enabling an electronic service, comprising
a mobile device (10) on which an operating system runs and which includes a network interface (22) for connection to a network, and a display (12), and
a separate electronic module (14) that is connected to the mobile device (10) via an interface (20, 24) and includes a card reader (16) for a chip card (18) as well as a control unit (26),
**characterized in that**
installed on the mobile device (10) is an application program which is configured to generate an input window (28) on the touch-screen display (12) of the mobile device (10), via which input window (28) a user can input authorization data for carrying out or enabling the electronic service, and
**in that** the electronic module (14) includes its own keypad without a display, the control unit (26) of the electronic module (14) being configured to allow the authorization data to be input via the keypad of the electronic module (14).

## Revendications

1. Agencement de dispositif pour la réalisation ou le lancement d'un service électronique, comprenant
un appareil mobile (10) sur lequel un système d'exploitation fonctionne et qui présente une interface réseau (22) pour un raccordement au réseau, et
un module électronique séparé (14) qui est relié à l'appareil mobile (10) par l'intermédiaire d'une interface (20, 24) et qui présente un lecteur de carte (16) pour une carte à puce (18) ainsi qu'une unité de commande (26),
une fenêtre d'entrée (28) étant apte à être générée sur l'appareil mobile (10), au moyen de laquelle un utilisateur peut entrer des données d'autorisation pour la réalisation ou le lancement du service électronique,
**caractérisé en ce que** l'unité de commande (26) du module électronique (14) est aménagée de manière à pouvoir générer la fenêtre d'entrée (28) sur l'appareil mobile (10) indépendamment du système d'exploitation de celui-ci.

2. Agencement de dispositif pour la réalisation ou le lancement d'un service électronique, comprenant
un appareil mobile (10) sur lequel un système d'exploitation fonctionne et qui présente une interface réseau (22) pour un raccordement au réseau et un écran tactile (12), et
un module électronique séparé (14) qui est relié à l'appareil mobile (10) par l'intermédiaire d'une interface (20, 24) et qui présente un lecteur de carte (16) pour une carte à puce (18) ainsi qu'une unité de commande (26),
**caractérisé en ce que**
un programme d'application est installé sur l'appareil mobile (10), lequel est aménagé de manière à générer une fenêtre d'entrée (28) dans l'écran tactile (12) de l'appareil mobile (10) par l'intermédiaire de laquelle un utilisateur peut entrer des données d'autorisation pour la réalisation ou le lancement du service électronique, la fenêtre d'entrée (28) contenant un agencement de touches virtuelles, et
**en ce que** l'unité de commande (26) du module électronique (14) est aménagée de manière à mettre des graphiques matricielles individuelles à disposition pour au moins certaines des touches virtuelles, lesquelles sont affichées par le programme d'application à l'endroit de la touche virtuelle respective.

3. Agencement de dispositif selon la revendication 1 ou 2, **caractérisé en ce que** l'unité de commande (26) dispose d'une technique d'encodage et est aménagée de telle sorte que des données extraites de la carte à puce (18) sont immédiatement codées et des données de sécurité ou des données confidentielles du module électronique (14) sont transmises uniquement sous forme codée.

4. Agencement de dispositif selon l'une des revendications précédentes, **caractérisé en ce que** l'unité de commande (26) ou le programme d'application est aménagé(e) de telle sorte qu'un bloc de chiffres ou de lettres avec des touches virtuelles aptes à être sélectionnées par l'utilisateur et agencées de manière randomisée est affiché lors de la génération de la fenêtre d'entrée (28).

5. Agencement de dispositif selon l'une des revendications précédentes, **caractérisé en ce que** l'appareil mobile (10) et le module électronique (14) sont reliés l'un à l'autre par l'intermédiaire d'un raccordement (20) et d'un connecteur enfichable (24).

6. Agencement de dispositif selon l'une des revendications précédentes, **caractérisé en ce que** l'appareil mobile (10) et le module électronique (14) sont reliés l'un à l'autre sans fil.

7. Agencement de dispositif selon l'une des revendications précédentes, **caractérisé en ce que** le module électronique (14) dispose de son propre firmware indépendant de l'appareil mobile (10).

8. Procédé d'entrée sûre de données d'autorisation pour la réalisation ou le lancement d'un service électronique, comprenant les étapes suivantes :
- fournissement d'un agencement de dispositif selon l'une des revendications 2 à 6 ;
- raccordement du module électronique (14) à l'appareil mobile (10) ;
- insertion d'une carte à puce (18) dans le lecteur de carte (16) ;
- génération d'une fenêtre d'entrée (28) avec un agencement de touches virtuelles sur l'écran tactile (12) de l'appareil mobile (10) au moyen d'un programme d'application installé sur l'appareil mobile (10) ;
- affichage des graphiques matricielles aux endroits d'au moins certaines des touches virtuelles, les graphiques matricielles étant fournies par l'unité de commande (26) du module électronique (14) ;
- entrée des données d'autorisation par l'intermédiaire de la fenêtre d'entrée (28) par un utilisateur en appuyant sur les touches virtuelles ;
- décodage des donnés d'autorisation entrées dans l'unité de commande (26) ; et
- vérification des données d'autorisation décodées au moyen de la carte à puce (18).

9. Procédé selon la revendication 8, **caractérisé en ce que** l'unité de commande (26) fournit une graphique matricielle individuelle pour chaque touche virtuelle sur demande du programme d'application et la transmet sous forme codée à l'appareil mobile (10), et **en ce que** le programme d'application représente chaque touche avec la graphique matricielle prévue pour celle-ci selon une attribution prédéfinie par l'unité de commande (26).

10. Procédé selon la revendication 9, **caractérisé en ce que** l'attribution des graphiques matricielles aux touches virtuelles est réalisée au moyen d'un générateur de nombres aléatoires.

11. Procédé selon l'une des revendications 8 à 10, **caractérisé en ce que** le programme d'application mémorise l'ordre des positions des touches virtuelles appuyées sous forme de code et transmet ce code à l'unité de commande (26) pour un décodage.

12. Procédé selon la revendication 11, **caractérisé en ce que** l'unité de commande (26) vérifie après un décodage de l'ordre des positions les données d'autorisation ainsi déterminées au moyen de la carte à puce (18).

13. Procédé selon l'une des revendications 8 à 12, **caractérisé en ce que** l'interface réseau (22) de l'appareil mobile (10) est utilisée pour un raccordement du module électronique (14) à un serveur distant.

14. Agencement de dispositif pour la réalisation ou le lancement d'un service électronique, comprenant
un appareil mobile (10) sur lequel un système d'exploitation fonctionne et qui présente une interface réseau (22) pour un raccordement au réseau et un écran (12), et
un module électronique séparé (14) qui est relié à l'appareil mobile (10) par l'intermédiaire d'une interface (20, 24) et qui présente un lecteur de carte (16) pour une carte à puce (18) ainsi qu'une unité de commande (26),
**caractérisé en ce que**
un programme d'application est installé sur l'appareil mobile (10), lequel est aménagé de manière à générer une fenêtre d'entrée (28) dans l'écran tactile (12) de l'appareil mobile (10) par l'intermédiaire de laquelle un utilisateur peut entrer des données d'autorisation pour la réalisation ou le lancement du service électronique, et
**en ce que** le module électronique (14) présente son propre clavier sans écran, l'unité de commande (26) du module électronique (14) étant aménagée de sorte que les données d'autorisation peuvent être entrées au moyen du clavier du module électronique (14).
